# EUROPEAN PATENT SPECIFICATION

(11) **EP 0 593 215 B1**
(45) Date of publication and mention of the grant of the patent: **26.06.1996**
(21) Application number: 93307999.8
(22) Date of filing: 07.10.1993
(51) Int. Cl.: B60C 9/20

(54) **Heavy duty pneumatic radial tires**
Radiale Luftreifen für LKW
Bandages pneumatiques radiaux pour poids-lourds

(30) Priority: 14.10.1992 JP 301794/92
(43) Date of publication of application: 20.04.1994
(73) Proprietor: BRIDGESTONE CORPORATION, Tokyo 104 (JP)
(72) Inventor: Sato, Tetsuhiko, Kodaira-shi, Tokyo (JP)
(74) Representative: Whalley, Kevin

(56) References cited:
- EP-A- 0 318 128
- FR-A- 2 244 635
- FR-A- 2 386 425
- US-A- 5 027 877
- US-A- 5 111 864

## Description

This invention relates to heavy duty pneumatic radial tires which are applicable to heavy duty vehicles such as large construction vehicles.

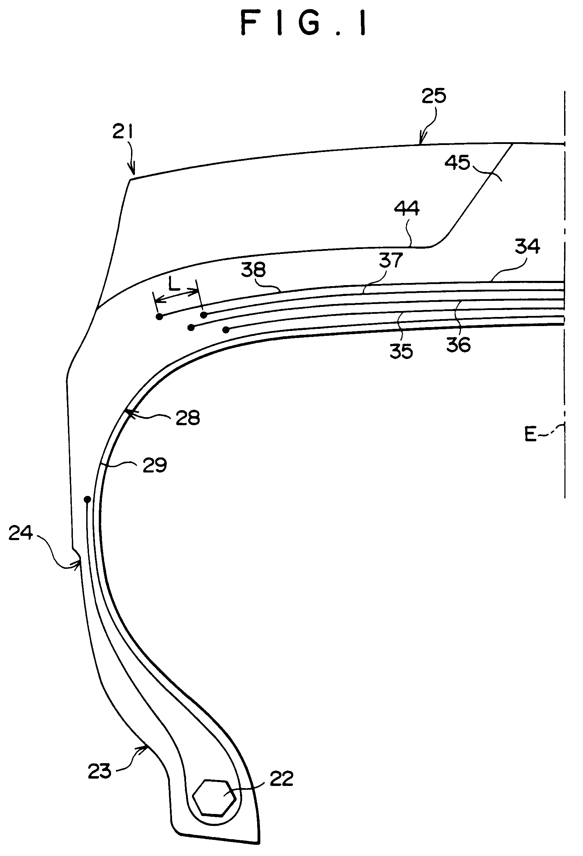

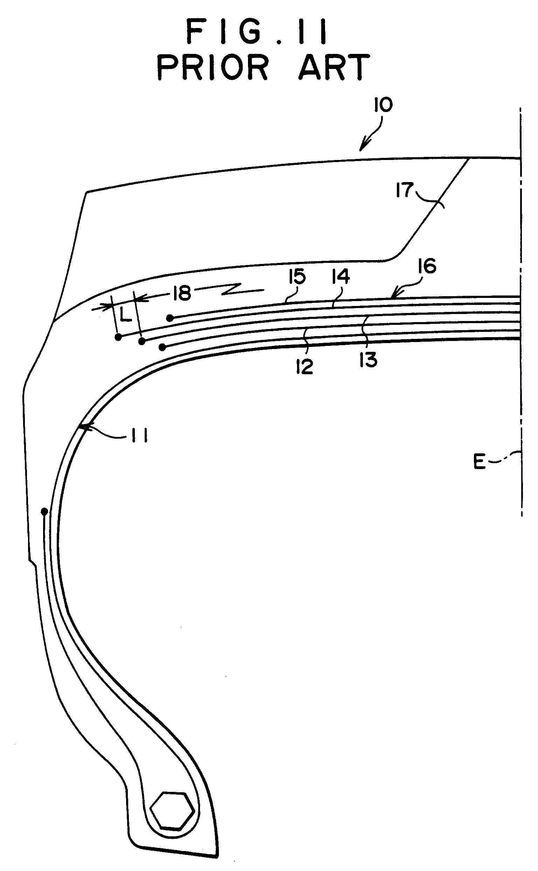

In general, a heavy duty pneumatic radial tire 10 as shown in Fig. 11 of the accompanying drawings is adopted for large construction vehicles such as dumpers,loaders,scrapers etc and includes a carcass layer 11 reinforced by radially extending steel cords,a belt layer 16 arranged radially outward of the carcass layer 11 and comprising four or more belt plies(four belt plies 12,13,14,15 in Fig. 1) and a tread 17 arranged radially outward of the belt layer 16. Oblique directions of the steel cords of each ply adjacent to each other are opposite and intersect.

However, when such a tire 10 is subjected to a heavy load while running, separations occur at both ends of the belt plies 12,13,14,15 in their width directions.

In heavy duty pneumatic radial tires of this kind,deformations of the tread 17 force inclined angles of the steel cords to deform in opposite directions in the so-called "Pantograph displacement",and shearing strains occur because of the deformation of the steel cords in rubber embraced between adjacent belt plies 12,13,14,15. The shearing strains progressively increase as displaced portions are nearer to ends of the belt plies in their width directions and have the maximum value at both ends of the belt ply 13.

In order to decrease the separations, therefore, an attempt has been made to restrain the shearing strains by changing intersection angles of the steel cords of the belt plies with the equatorial plane E of the tire within limits which maintain the performance of the tire, narrowing widths of the belt plies in their width directions within limits which also maintain the performance of the tire, and arranging cushion rubbers at both adjacent belt plies.

Although fairly good results have been obtained with such tires, the separations could not be sufficiently prevented.

The inventors have investigated the cause of the separations at both ends of the belt plies. As a result, the following factors have been found besides the factors mentioned above. The shearing strains occur largely in an area 18 of the rubber embraced between a belt ply having maximum width (belt ply 14) and a belt ply having the second widest width (belt ply 13 arranged radially inward and adjacent to the belt ply 14). This increases rigidity of the rubber of the area 18 and make it impossible to deform. In the running of the tire, though a heavy load is applied to the tread(rubber)17 between the belt ply having the maximum width 14 and the tread surface, the rubber embraced between two plies does not easily deform because of its high rigidity. The tread 17, therefore, is pressed and deformed in a radial direction. At this time, rubber (the tread 17) is, in general, non-compressible,so the rubber whose volume is equal to that of the rubber pressed in the tread 17 flows to the ends of the plies in width directions. The rubber flows to both ends of the belt ply having the maximum width 14 in width directions through the tread 17 and the belt ply having the maximum width 14 outside of the area 18 in width directions. In this flow, a distance L from the end of the belt ply having the maximum width 14 to that of the belt ply having second widest width 13 in width directions is so small that the rubber flow is accumulated at both ends of the belt ply having the maximum width 14. As a result, tensile forces occur repeatedly at both ends of the belt ply having the maximum width 14. The tensile forces generate cracks there, finally resulting in separations.

Attention is also drawn to the disclosures of US-A-5027877 and of US-A- 5082042, which corresponds to the preamble of claim 1.

It is a primary object of the invention to provide an improved heavy duty pneumatic radial tire which is able to effectively prevent the separations at ends of the belt plies.

Accordingly, the present invention provides a heavy duty pneumatic radial tire comprising a carcass layer containing steel cords therein extending in a radial direction of the tire, a belt layer comprising four belt plies piled radially one above the other and containing steel cords therein, and a tread arranged radially outward of the belt layer, wherein the four belt plies comprise a large belt ply having a width wider than that of the other belt plies, a middle belt ply arranged radially inward of the large belt ply and having steel cords arranged obliquely in the same directions as those of steel cords of the large belt ply, a first small belt ply arranged between the large belt ply and the middle belt ply and having steel cords arranged obliquely in opposite directions to those of the cords of the large belt ply and having a width smaller than that of the middle belt ply, and a second small belt ply arranged radially inward of the middle belt ply and having steel cords arranged obliquely in opposite directions to those of the cords of the large belt ply and having a width smaller than that of the middle belt ply; characterized by further comprising at least two additional plies, each having a width smaller than that of the ply which has the smallest width among the four belt plies, and in that at least one of said four belt plies is arranged radially between any two of said additional belt plies.

When the heavy duty pneumatic radial tire of the invention is running, inclined angles of the steel cords of the large belt ply having the maximum width and that of the belt ply adjacent to the large belt ply having the maximum width (directions of steel cords are opposite to those of the large belt ply having the maximum width) deform in opposite directions with respect to each other(Pantograph displacement). This deformation generates shearing strains in rubber embraced between the large belt ply having the maximum width and the belt ply adjacent thereto. The value of the shearing strains progressively increases as displaced portions are further from an equatorial plane of the tire and have the maximum value at both ends of the belt ply. In the invention,however,a first small belt ply having a width smaller than that of the large belt ply having the maximum width and a middle belt ply is arranged adjacent to the large belt ply having the maximum width instead of arranging the middle belt ply having the second widest width as a ply adjacent to the large belt ply having the maximum width. The value of the shearing strains ,therefore,decreases by shortening the overlapping length of two belt plies in width directions. In this case,moreover,because the middle belt ply has steel cords arranged obliquely in the same direction as those of the large belt ply having the maximum width , shearing strains hardly occur in the rubber embraced between the large belt ply having the maximum width and the middle belt ply having the second widest width. As a result, the separations are not generated at both ends of the middle belt ply having the second widest width.

As previously mentioned, difficulty of the deformations of the rubber because of its increased rigidity by the shearing strains result in flowing of the rubber whose volume is equal to that of the rubber pressed in the tread to ends of the plies in width directions. The rubber flows through the large belt ply having the maximum width outside of the ends of the first small belt ply in width directions and the tread and generates tensile forces at both ends of the large belt ply having the maximum width in width directions. When the rubber flows to both ends of the large belt ply, it affects the large belt ply and extends both ends of the large belt ply outward in width directions. In this case, the first small belt ply having a smaller width than that of the middle belt ply provides a large length L from the first small belt ply to that of the the large belt ply in both width directions. As a result, the value of the tensile forces generated at both ends of the large belt ply is decreased. The decrease of the value of the tensile forces efficiently prevents generating of cracks and also belt end separation. Further,a part of the large belt ply radially overlapped with the first small belt ply is restrained so strongly by the rubber embraced between two plies having high rigidity that it can hardly extend in width directions. Also, since the large belt ply having the maximum width is arranged radially outermost,it is not necessary to consider the rubber flow of the tread adjacent to the middle belt ply, the first small belt ply and the second small belt ply which are arranged radially inward of the large belt ply.

At least two additional belt plies are provided in order to strengthen the so-called "hoop effect". In this case,these additional belt plies may be optionally arranged radially outward of the large belt ply ,radially inward of the second small belt ply and/or between two plies adjacent each other, provided that at least one of the four belt plies is arranged radially between any two of the additional belt plies. Widths of the additional plies are smaller than that of the belt ply having the smallest width among the four belt plies in order to prevent belt end separation.

For a better understanding of the invention,reference is made to the accompanying drawings, wherein:
Fig .1 is a sectional view of a tire taken along a meridian plane of the tire;
Fig.2 is a sectional plan view of the tread of the tire of Fig. 1;
Fig.3 is a sectional view of a tire off an embodiment of the invention taken along a meridian plane of the tire;
Fig.4 is a sectional view of a comparison tire 1,taken along a meridian plane of the tire;
Fig.5 is a sectional view of a comparison tire 2,taken along a meridian plane of the tire;
Fig.6 is a sectional view of a comparison tire 3,taken along a meridian plane of the tire;
Fig.7 is a sectional view of a comparison tire 4,taken along a meridian plane of the tire;
Fig.8 is a sectional view of a sample tire 2, taken along a meridian plane of the tire;
Fig.9 is a sectional view of a comparison tire 5,taken along a meridian plane of the tire;
Fig.10 is a sectional view of a sample tire 4,according to the invention, used in the experiment taken along a meridian plane of the tire;and
Fig.11 is a sectional view of a conventional prior art tire, taken along a meridian plane of the tire

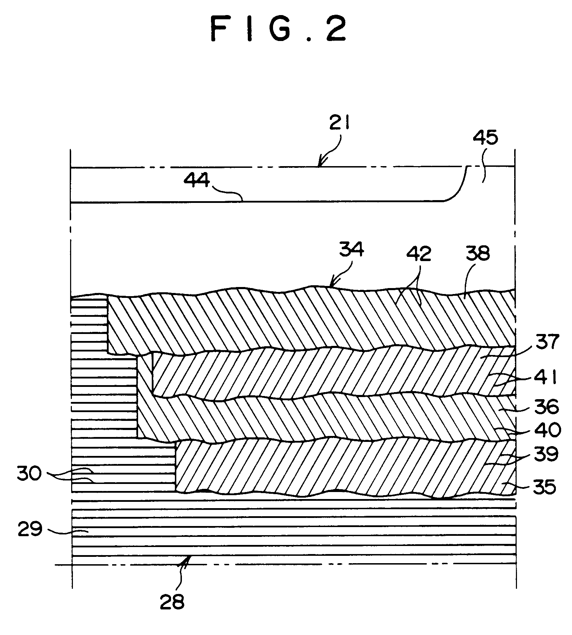

Figs. 1 and 2 show a heavy duty pneumatic radial tire 21 to be used for dumpers,loaders,scrapers etc. The tire 21 comprises a pair of bead portions 23 having a pair of beads 22 therein,a pair of sidewall portions 24 extending radially outwardly from the bead portions 23,a tread portion 25 cylindrically constructed and connecting the radial ends of the sidewall portions,and a carcass layer 28 toroidally constructed having radially extending cords anchored by the pair of beads 22. Both ends of the carcass layer 28 in width directions are turned up from axially inward to outward around the pair of the beads 22 on the right and left of the tire. The carcass layer 28 comprises at least one carcass ply (one ply 29 in this embodiment) containing a number of steel cords 30 therein extending in a radial direction of the tire.

A belt layer 34 comprises four belt plies piled radially(four belt plies 35,36,37,38 piled radially in series in this embodiment). A number of steel cords 39,40,41,42 intersecting an equatorial plane E of the tire with intersecting angles of 15°to 30° are embedded in these belt plies 35,36,37,38.Further,among those plies 35,36,37,38,the belt ply 38 arranged radially outermost has the maximum width.Therefore,it is called a large belt ply 38.It has steel cords 42 extending from upper left to lower right for instance.

A belt ply 36 arranged radially inward of the large belt ply 38 has the second widest width(therefore,it is called a middle belt ply) and steel cords 40 therein arranged obliquely in the same directions as the steel cords 42 of the large belt ply 38(upper left to lower right)

A belt ply 37 arranged radially between the large belt ply 38 and the middle belt ply 36(called a first small belt ply) has a width smaller than the middle belt ply 36 and steel cords 41 therein arranged obliquely in opposite directions and intersecting with the steel cords 42,40 of the large belt ply 38 and the middle belt ply 36(upper right to lower left). An innermost belt ply 35 radially inward of the middle belt ply 36 has a width smaller than the middle belt ply 36(called a second small belt ply) and has steel cords 39 therein arranged obliquely in opposite directions and intersecting with the steel cords 42,40 of the large belt ply 38 and the middle belt ply 36 the same as the steel cords 41 of the first small belt ply 37(upper right to lower left).

Though the first small belt ply 37 is wider than the second small belt ply 35 in width directions in this embodiment,either of the two plies may be wider than the other in width direction. Further,a tread 45 made of rubber having a number of grooves 44 is arranged radially outward of the belt layer 34.

When the tire 21 fitted to a large construction vehicle is running,shearing strains occur in rubber embraced between the belt plies 35 and 36, the belt plies 36 and 37, and the belt plies 37 and 38 because of deformations of the angles of the steel cords 39,40,41,42 in opposite directions(Pantograph displacement) of those belt plies 35,36,37,38 forced by deformations of the tread 45. The shearing strains progressively increase as displaced portions are farther from the equatorial plane E of the tire and has the maximum value at both ends of the first small belt ply 37. In this embodiment, the first small belt ply 37 having a width smaller than that of the large belt ply 38 and the middle belt ply 36 is arranged adjacent the large belt ply 38 instead of arranging the middle belt ply 36 having the second widest width. The value of the shearing strains,therefore,decreases by shortening overlapping length of the large belt ply 38 and the first small belt ply 37. Further, because the middle belt ply 36 has the steel cords 40 arranged obliquely in the same directions as the steel cords 42 of the large belt ply 38,the shearing strains hardly occur in the rubber embraced between these two plies. As a result, separations are not generated at both ends of the middle belt ply 36.

The rubber embraced between the large belt ply 38 and the first small belt ply 37 does not easily deform because of its high rigidity caused by the shearing strains. The tread 45 corresponding to an overlapping area of the large belt ply 38 and the first small belt ply 37(inside of the both ends of the first small belt ply 37 in width directions) is pressed, and the rubber pressed in the tread 45 flows outwardly in width directions. The rubber flow to both ends of the large belt ply 38 outside of the first small belt ply 37 in width directions generates tensile forces at both ends of the large belt ply 38. When the rubber flows to both ends of the large belt ply 38,it affects the large belt ply 38 and extends both ends of the large belt ply 38 outwardly in width directions. At this time, the first small belt ply 37 has a smaller width than that of the middle belt ply 36 so that a large length L(length to be extended)compared with conventional tires from both ends of the first small belt ply 37 to that of the large belt ply 38 in width directions can be provided. As a result, the value of the tensile forces generated at both ends of the large belt ply 38 is decreased. This effectively prevents generation of cracks and also belt end separation. Further,a part of the large belt ply 38 radially overlapped with the first small belt ply 37 is restrained so strongly by the rubber embraced between two plies having high rigidity that it can hardly extend by the rubber flow in width directions. Also, since the large belt ply 38 having the maximum width is arranged as the outermost ply, it is not necessary to consider the rubber flow of the tread 45 adjacent to the middle belt ply 36 ,the first small belt ply 37 and the second small belt ply 35 which are arranged radially inward of the large belt ply 38.

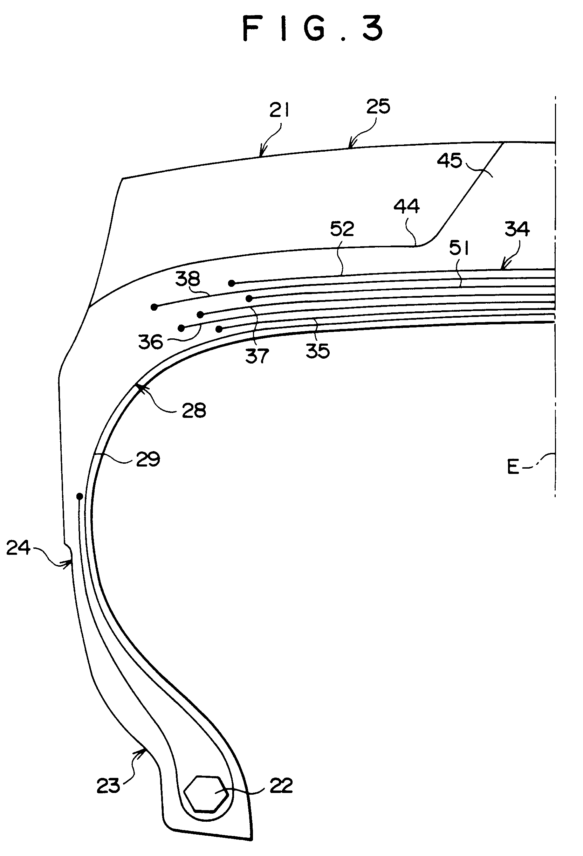

Fig.3 shows an embodiment of the invention,in which at least two additional belt plies,that is a first additional belt ply 51 between the large belt ply 38 and the first small belt ply 37 and a second additional belt ply 52 radially outward of the large belt ply 38, are arranged so that the hoop effect of the belt layer 34 can be strengthened.Steel cords embedded in the first additional belt ply 51 are arranged obliquely in the same directions as the steel cords 42 from the upper left to the lower right,while the steel cords embedded in the second additional belt ply 52 are arranged obliquely in opposite directions to the steel cords 42 of the large belt ply 38 from the upper right to the lower left. Additional belt plies may be optionally arranged radially outward of the large belt ply 38,radially inward of the second small belt ply 35 and/or between two plies adjacent each other, provided that at least one of the four belt plies 35-38 is arranged radially between any two of the additional belt plies. The steel cords may be arranged obliquely in either direction. The width of each additional belt ply must be smaller than that of the smallest ply among the four plies in order to prevent belt end separation. The widths of the additional plies 51,52 are smaller than the width of the second small belt ply 35 in this embodiment.

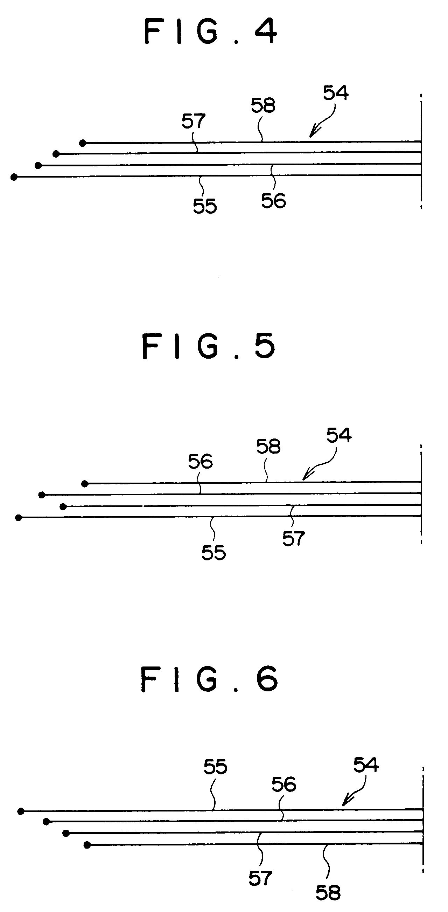

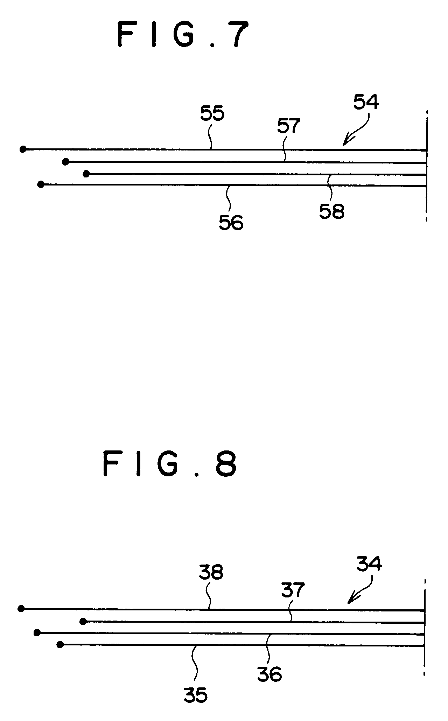

Results of experiments carried out by the applicants will be explained hereinafter. In these experiments, seven tires were prepared as follows. (1)A conventional prior art tire having a belt layer 16 as shown in Fig.11. (2)A comparison tire 1 having a belt layer 54 consisting of a large belt ply 55,a middle belt ply 56,a small belt ply 57,and a belt ply 58 having the smallest width piled in series from radially inward to outward as shown in Fig.4. (3)A comparison tire 2 having a belt layer 54 consisting of a large belt ply 55,a small belt ply 57,a middle belt ply 56 and a belt ply 58 having the smallest width piled in series from radially inward to outward as shown in Fig.5. (4)A comparison tire 3 having a belt layer 54 consisting of a belt ply 58 having the smallest width,a small belt ply 57,a middle belt ply 56 and a large belt ply 55 piled in series from radially inward to outward as shown in Fig.6. (5)A comparison tire 4 having a belt layer 54 consisting of a middle belt ply 56,a belt ply 58 having the smallest width,a small belt ply 57 and a large belt ply 55 piled in series from radially inward to outward as shown in Fig.7. (6)A sample tire 1 according to the embodiment as shown in Fig.1 and 2. (7)A sample tire 2 having a belt layer 34 consisting of a second small belt ply 35,a middle belt ply 36,a first small belt ply 37 narrower than the second small belt ply 35 and a large belt ply 38 piled in series from radially inward to outward as shown in Fig.8. The size of all these tires was ORR 1800R25.

The width of the largest belt plies 38,55 was 350mm. The width of the middle belt ply 36,56 was 310mm. The width of the first small belt ply 37 in the sample tire 1 ,the second small belt ply 35 in the sample tire 2 and the small belt ply 57 was 270mm. The width of the second small belt ply 35 in the sample tire 1,the first small belt ply 37 in the sample tire 2 and the belt ply 58 having the smallest width was 230mm. Intersection angles of steel cords of each ply with an equatorial plane were 23° from upper left to lower right from radially inward to outward. The tires were rolled on a drum whose diameter was 5m for a maximum time of 500 hours at a speed of 15km. At this time,the inner pressure of the tires was the standard pressure 7.0kg/cm² and the load was 11000kg which is 120% of the normal load.

In the conventional tire 10,after running for 300 hours,separations between the belt plies 13 and 14 at both ends of two plies in width directions caused by Pantograph displacement and large cracks at both end of the belt ply 13 caused by shearing strains were generated. In the comparison tire 1,after running for 250 hours,separations between the large belt ply 55 and the middle belt ply 56 caused by Pantograph displacement and large cracks at both ends of all belt plies 55,56,57,58 in width directions caused by shearing strains were generated. In the comparison tire 2,after running for 350 hours,large cracks at both ends of the middle belt ply 56 and the belt ply 58 having the smallest width in width directions were generated. In the comparison tire 3,after running for 280 hours,separation between the large belt ply 55 and the middle belt ply 56 and small cracks at both ends of the large belt ply 55 caused by shearing strains were generated. In the comparison tire 4,after running for 320 hours,separations between the large belt ply 55 and both the small belt ply 57 and the middle belt ply 56 caused by Pantograph displacement and small cracks at both ends of the large belt ply 55 caused by shearing strains were generated. In the sample tires 1 and 2, however,no separations caused by Pantograph displacement and no cracks caused by shearing strains were generated after running completely under the conditions mentioned above.

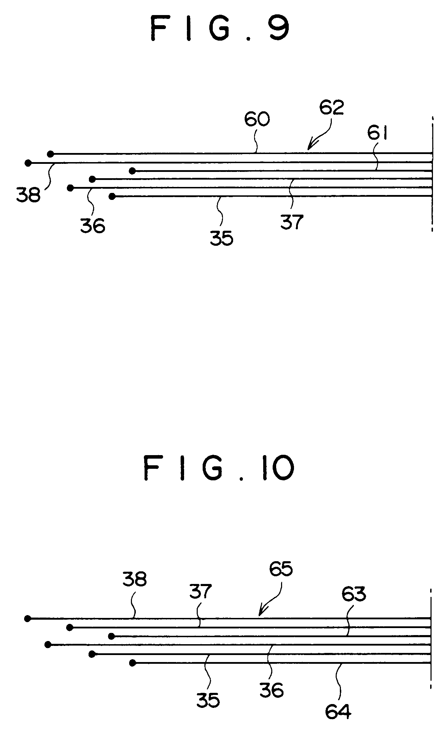

In a second experiment, three tires were prepared. (1)A comparison tire 5 as shown in Fig.9 comprises a belt layer 62 having an outer additional belt ply 60(steel cords oblique at an angle of 23°in opposite directions to those of a large belt ply 38)arranged radially outward of the large belt ply 38 and having a width smaller than that of the large belt ply 38 and wider than that of a middle belt ply 36,and a mid additional belt ply 61(steel cords oblique at an angle of 20° in the same directions as those of the large belt ply 38)arranged between the large belt ply 38 and a first small belt ply 37,in addition to the large belt ply 38,the middle belt ply 36,the first small belt ply 37 and a second small belt ply 35. (2)A sample tire 3 according to the embodiment of the invention as shown in Fig.3. (3)A sample tire 4 as shown in Fig.10, also of the invention, comprises a belt layer 65 having a mid additional belt ply 63(narrower than a first and a second small belt ply 37,35 and steel cords oblique at an angle of 20° in opposite directions to those of a middle belt ply 36) arranged between the first small belt ply 37 and the middle belt ply 36,and an inner additional belt ply 64(steel cords oblique at an angle of 23° in the same directions as those of the large belt ply 38) arranged radially inward of the second small belt ply 35 having the smallest width, in addition to the first small belt ply 37,the middle belt ply 36,the second small belt ply 35 and the large belt ply 38(the second small belt ply 35 is narrower than the first small belt ply 37). The size of all these tires was ORR 45/65 R45. The widths of the second small belt ply 35,the first small belt ply 37,the middle belt ply 36 and the large belt ply 38 were respectively 700mm,750mm,800mm,900mm. Directions and angles of the steel cords were the same as those of the first embodiment(Fig.1 and 2). The width of the outer additional belt ply 60,the mid additional belt ply 61,the mid additional belt ply 63 and the inner additional belt ply 64 were respectively 850mm,650mm,650mm,600mm. The tires were rolled on a drum whose diameter was 5m for a maximum time of 800 hours at a speed of 5km. At this time, the inner pressure of the tires was the standard pressure 5.25kg/cm² and the load was 48000kg which is 120% of the normal load.

In the comparison tire 5,after running for 600 hours,separations between both ends of the outer additional belt ply 60 and the large belt ply 38 in width directions caused by Pantograph displacement and small cracks caused by shearing strains at both ends of the outer additional belt ply 60 and the large belt ply 38 in width directions were generated. In the sample tires 3 and 4 according to the invention,however,no separations caused by Pantograph displacement and no cracks caused by shearing strains were generated after running completely under the conditions mentioned above.

As can be seen from the above explanation,the separations at both ends of the belt plies are effectively prevented according to the invention.

It is further understood by those skilled in the art that the foregoing description is that of preferred embodiments of the disclosed tires and that various changes and modifications may be made in the invention without departing from the scope of the claims.

## Claims

1. A heavy duty pneumatic radial tire (21) comprising a carcass layer (28) containing steel cords therein extending in a radial direction of the tire, a belt layer (34) comprising four belt plies piled radially one above the other and containing steel cords therein, and a tread (25) arranged radially outward of the belt layer, wherein the four belt plies comprise a large belt ply (38) having a width wider than that of the other belt plies, a middle belt ply (36) arranged radially inward of the large belt ply and having steel cords arranged obliquely in the same directions as those of steel cords of the large belt ply, a first small belt ply (37) arranged between the large belt ply and the middle belt ply and having steel cords arranged obliquely in opposite directions to those of the cords of the large belt ply and having a width smaller than that of the middle belt ply, and a second small belt ply (35) arranged radially inward of the middle belt ply and having steel cords arranged obliquely in opposite directions to those of the cords of the large belt ply and having a width smaller than that of the middle belt ply; characterized by further comprising at least two additional plies (51, 52; 63, 64), each having a width smaller than that of the ply (35) which has the smallest width among the four belt plies (35-38), and in that at least one of said four belt plies is arranged radially between any two of said additional belt plies.

2. A pneumatic radial tire as claimed in claim 1, characterized in that said first small belt ply (37) has a width greater than that of said second small belt ply (35).

3. A pneumatic radial tire as claimed in claim 1 or 2, characterized in that said large belt ply (38) is arranged between two of said additional belt plies (51, 52).

4. A pneumatic radial tire as claimed in claim 1 or 2, characterized in that said middle belt ply (36) and said second small belt ply (35) are arranged between two of said additional belt plies (63, 64).

5. A pneumatic radial tire as claimed in any of claims 1 to 4, characterized in that the cords of said four belt plies (35-38) intersect an equatorial plane of the tire at angles in the range of 15-30 degrees.

6. A pneumatic radial tire as claimed in claim 5, characterized in that said cord angles are the same for each belt ply.

## Patentansprüche

1. Schwerlast-Radialluftreifen (21), der folgende Komponenten aufweist: eine Karkassenschicht (28), die Stahlkorde enthält, die sich in einer Radialrichtung des Reifens erstrecken, eine Gürtelschicht (34), die vier Gürtellagen umfaßt, die in Radialrichtung eine über der anderen angeordnet sind und Stahlkorde enthalten, und eine Lauffläche (25), die in Radialrichtung von der Gürtelschicht nach außen angeordnet ist, wobei die vier Gürtellagen folgende Elemente umfassen: eine große Gürtellage (38), die eine größere Breite als die anderen Gürtellagen hat, eine mittlere Gürtellage (36), die in Radialrichtung von der großen Gürtellage nach innen angeordnet ist und Stahlkorde hat, die schräg in denselben Richtungen wie die der Stahlkorde der großen Gürtellage angeordnet sind, eine erste schmale Gürtellage (37), die zwischen der großen Gürtellage und der mittleren Gürtellage angeordnet ist und Stahlkorde hat, die schräg in den entgegengesetzten Richtungen zu denen der Korde der großen Gürtellage angeordnet sind, und die eine Breite hat, die kleiner als die der mittleren Gürtellage ist, und eine zweite schmale Gürtellage (35), die in Radialrichtung von der mittleren Gürtellage nach innen angeordnet ist und Stahlkorde hat, die schräg in den entgegengesetzten Richtungen zu denen der Korde der großen Gürtellage angeordnet sind, und die eine Breite hat, die kleiner als die der mittleren Gürtellage ist; dadurch gekennzeichnet, daß er weiter zumindest zwei zusätzliche Lagen (51, 52; 63, 64) aufweist, die jeweils eine Breite haben, die kleiner als die der Lage (35) ist, welche die geringste Breite der vier Gürtellagen (35 bis 38) hat, und daß wenigstens eine der vier Gürtellagen in Radialrichtung zwischen jedweden zwei der zusätzlichen Gürtellagen angeordnet ist.

2. Radialluftreifen nach Anspruch 1, dadurch gekennzeichnet, daß die erste schmale Gürtellage (37) eine Breite hat, die größer als die der zweiten schmalen Gürtellage (35) ist.

3. Radialluftreifen nach Anspruch 1 oder 2, dadurch gekennzeichnet, daß die große Gürtellage (38) zwischen zwei der zusätzlichen Gürtellagen (51, 52) angeordnet ist.

4. Radialluftreifen nach Anspruch 1 oder 2, dadurch gekennzeichnet, daß die mittlere Gürtellage (36) und die zweite schmale Gürtellage (35) zwischen zwei der zusätzlichen Gürtellagen (63, 64) angeordnet sind.

5. Radialluftreifen nach einem der Ansprüche 1 bis 4, dadurch gekennzeichnet, daß die Korde der vier Gürtellagen (35 bis 38) eine Äquatorialebene des Reifens in Winkeln in einem Bereich von 15 bis 30° schneiden.

6. Radialluftreifen nach Anspruch 5, dadurch gekennzeichnet, daß die Fadenwinkel für jede Gürtellage gleich sind.

## Revendications

1. Pneumatique radial pour poids lourds (21) comprenant une couche de carcasse (28) contenant des câblés en acier, s'étendant dans une direction radiale du pneumatique, une couche de ceinture (34) comprenant quatre nappes de ceinture empilées radialement l'une au-dessus de l'autre et contenant des câblés en acier, et une bande de roulement (25), agencée radialement vers l'extérieur de la couche de ceinture, les quatre nappes de ceinture comprenant une grande nappe de ceinture (38) ayant une largeur supérieure à celle des autres nappes de ceinture, une nappe de ceinture moyenne (36) agencée radialement vers l'intérieur de la grande nappe de ceinture et contenant des câblés en acier agencés de façon oblique dans les mêmes directions que les câblés en acier de la grande nappe de ceinture, une première petite nappe de ceinture (37), agencée entre la grande nappe de ceinture et la nappe de ceinture moyenne et comportant des câblés en acier agencés de façon oblique dans des directions opposées à celles des câblés de la grande nappe de ceinture et ayant une largeur inférieure à celle de la nappe de ceinture moyenne, et une deuxième petite nappe de ceinture (35), agencée radialement vers l'intérieur de la nappe de ceinture moyenne et comportant des câblés en acier agencés de façon oblique dans des directions opposées à celles des câblés de la grande nappe de ceinture et ayant une largeur inférieure à celle de la nappe de ceinture moyenne; caractérisé en ce qu'il comprend en outre au moins deux nappes additionnelles (51, 52; 63, 64) ayant chacune une largeur inférieure à celle de la nappe (35) ayant la plus petite largeur des quatre nappes de ceinture (35-38) et en ce que au moins une desdites quatre nappes de ceinture est agencée radialement entre deux nappes de ceinture quelconques desdites nappes de ceinture additionnelles.

2. Pneumatique radial selon la revendication 1, caractérisé en ce que ladite première petite nappe de ceinture (37) a une largeur supérieure à celle de ladite deuxième petite nappe de ceinture (35).

3. Pneumatique radial selon les revendications 1 ou 2, caractérisé en ce que ladite grande nappe de ceinture (38) est agencée entre deux desdites nappes de ceinture additionnelles (51, 52).

4. Pneumatique radial selon les revendications 1 ou 2, caractérisé en ce que ladite nappe de ceinture moyenne (36) et ladite deuxième petite nappe de ceinture (35) sont agencées entre deux desdites nappes de ceinture additionnelles (63, 64).

5. Pneumatique radial selon l'une quelconque des revendications 1 à 4, caractérisé en ce que les câblés desdites quatre nappes de ceinture (35-38) coupent un plan équatorial du pneumatique à des angles compris dans l'intervalle allant de 15 à 30 degrés.

6. Pneumatique radial selon la revendication 5, caractérisé en ce que lesdits angles de câblés sont les mêmes pour chaque nappe de ceinture.
